# EUROPEAN PATENT SPECIFICATION

(11) **EP 2 800 365 B1**
(45) Date of publication and mention of the grant of the patent: **27.02.2019**
(21) Application number: 12862295.8
(22) Date of filing: 05.10.2012
(51) Int. Cl.: H04N 21/43, H04N 21/436, H04N 21/478, H04N 21/8547, H04N 21/4788

(54) **VIDEO PLAYBACK SYSTEM**
VIDEOWIEDERGABESYSTEM
SYSTÈME DE LECTURE DE VIDÉO

(30) Priority: 29.12.2011 JP 2011290275
(43) Date of publication of application: 05.11.2014
(73) Proprietor: Sony Interactive Entertainment Inc., Tokyo 108-0075 (JP)
(72) Inventor: KUNIGITA, Hisayuki, Tokyo 108-0075 (JP); LEE, Seung-Hyun, Seoul 137-838 (KR); PARK, Jae-Hyun, Seoul 137-838 (KR); LEE, Taek-Joo, Seoul 137-838 (KR); JI, Ju-Yeong, Seoul 137-838 (KR)
(74) Representative: Müller Hoffmann & Partner
(86) International application number: PCT/JP2012/076046
(87) International publication number: WO 2013/099392

(56) References cited:
- WO-A1-2006/072853
- JP-A- 2002 164 915
- JP-A- 2004 235 734
- JP-A- 2008 219 424
- US-A1- 2009 172 457
- US-A1- 2009 214 191
- US-A1- 2009 235 298
- HIROSHI FUJIWARA SAISHIN MPEG KYOKASHO 01 August 1994, pages 231 - 253, XP002953538

## Description

### [Technical Field]

The present invention relates to a video reproduction system that contemporaneously reproduces plural videos, a video distribution device and a video reproduction device that form this video reproduction system, a control method and a control program of this video reproduction device, and an information storage medium that stores this control program.

### [Background Art]

A video reproduction device that reproduces a video representing a play screen of a computer game, a video obtained by shooting by a video camera, etc. is known (refer to e.g. PTL 1). In particular, if a video reproduction device that reproduces a video while receiving a video distributed by streaming by a video distribution device is used, the user of the video reproduction device can view, in real time, a screen of a game being presently played by another user who uses the video distribution device or a video being presently shot.

### [Citation List]

### [Patent Literature]

### [PTL 1]

### US 2008/1,182,32 A1

US 2009/0214191 A1 deals with a video reproduction system wherein a client device may receive content of a plurality of head ends. When receiving content from a specific head end, messages from another client device might be received as well, and the data streams of content and of messages may be integrated to create a combination data stream, on the basis of a known temporal relationship.

From US 2009/0172457 A1, it is known that a content provider sends content to a network operator, where a time stamp is associated upon encoding, for use with a client. The document discloses that there might be plural content providers, plural network operators, and plural clients.

### [Summary]

### [Technical Problem]

There is a case in which a user wants to contemporaneously view plural videos representing the same subject. Examples of the case include a case in which, regarding an online game in which plural users participate as a subject, the user contemporaneously views a game screen of each of these plural users and a case in which the user contemporaneously views videos obtained by shooting playing of an actual game of sports by plural cameras. In such a case, if the times it takes to distribute these plural videos are different from each other, plural videos that are generated at the same timing originally and represent one subject are reproduced at timings different from each other in some cases.

The present invention is made in view of the above-described circumstances and one of objects thereof is to provide a video reproduction system that can synchronize the reproduction timing of plural videos representing the same subject when contemporaneously reproducing these plural videos, a video distribution device and a video reproduction device that form this video reproduction system, a control method and a control program of this video reproduction device, and an information storage medium that stores this control program.

### [Solution to Problem]

The invention is defined by the appended independent claim and will be more readily understood after reading the following detailed description taken in conjunction with the accompanying drawings.

### [Brief Description of Drawings]

FIG. 1 is an outline diagram of a video reproduction system according to an embodiment of the present invention.
FIG. 2 is a configuration diagram of a video distribution device according to the embodiment of the present invention.
FIG. 3 is a configuration diagram of a video reproduction device according to the embodiment of the present invention.
FIG. 4 is a functional block diagram showing functions realized by the video reproduction system according to the embodiment of the present invention.
FIG. 5A is a time chart showing one example of synchronous control of distribution videos.
FIG. 5B is a time chart showing another example of the synchronous control of distribution videos.
FIG. 6 is a diagram showing one example of a display screen of distribution videos.
FIG. 7 is a time chart showing one example of display timing control of a message.
FIG. 8 is a flow diagram showing one example of a processing flow when distribution processing is started.
FIG. 9 is a flow diagram showing one example of a processing flow when the video reproduction device receives distribution videos.

### [Description of Embodiment]

An embodiment of the present invention will be described in detail below based on the drawings.

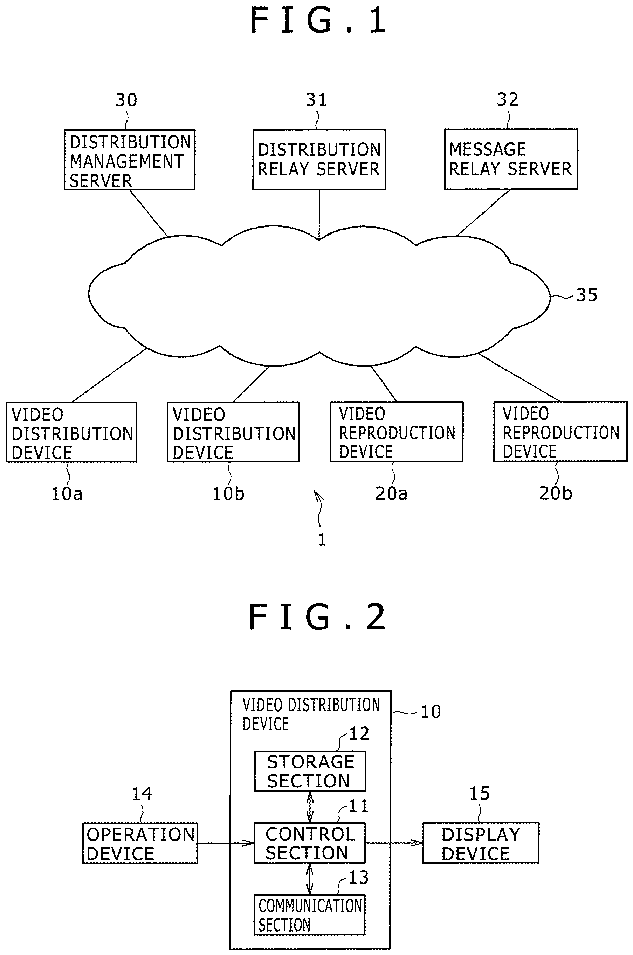

FIG. 1 is an outline diagram showing the overall outline of a video reproduction system 1 according to one embodiment of the present invention. The video reproduction system 1 is so configured as to include one or plural video distribution devices 10 and one or plural video reproduction devices 20. In the following, as a specific example, it is assumed that the video reproduction system 1 includes two video distribution devices 10, i.e. a video distribution device 10a used by a user U1 and a video distribution device 10b used by a user U2, and two video reproduction devices 20, i.e. a video reproduction device 20a used by a user U3 and a video reproduction device 20b used by a user U4. Furthermore, in the present embodiment, the video reproduction system 1 includes a distribution management server 30, a distribution relay server 31, and a message relay server 32. These servers, the video distribution devices 10, and the video reproduction devices 20 are connected via a communication network 35. Suppose that each video distribution device 10 is a game device that executes processing of an online game and the users of these video distribution devices 10 play the same on-line game. Specifically, for example the user U1 and the user U2 play a match-type online game via the network. Each video distribution device 10 distributes a video representing a play screen of the game being presently played by the user (hereinafter, referred to as distribution video D) to the video reproduction devices 20 via the distribution relay server 31. Each video reproduction device 20 contemporaneously reproduces both distribution video D1 distributed by the video distribution device 10a and distribution video D2 distributed by the video distribution device 10b.

The video distribution device 10 is an information processing device such as a home game machine or a personal computer and, as shown in FIG. 2, is so configured as to include a control section 11, a storage section 12, and a communication section 13. Furthermore, the video distribution device 10 is connected to an operation device 14 and a display device 15.

The control section 11 is a program control device such as a CPU and executes various kinds of information processing in accordance with a program stored in the storage section 12. The storage section 12 is so configured as to include memory elements such as RAM and ROM and stores a program to be executed by the control section 11 and data as the subject of processing by this program. Furthermore, the storage section 12 functions also as a working memory of the control section 11.

The communication section 13 is an interface for giving and receiving data to and from other devices via the communication network 35 and the video distribution device 10 carries out transmission and reception of information with the distribution management server 30 and the distribution relay server 31 via the communication section 13. Incidentally, the communication network 35 may include various kinds of communication networks such as the Internet, a local area network, and a wireless communication network.

The operation device 14 is a device that accepts operation inputs by the user and may be e.g. a controller attached to a home game machine, a keyboard, a mouse, etc. Furthermore, the operation device 14 may include operation members such as operation buttons and switches disposed on the chassis surface of the video distribution device 10. The user plays a game by making operation inputs to the operation device 14.

The display device 15 is an image display device such as a liquid crystal display or an organic EL display and displays an image according to an instruction from the control section 11. In particular, in the present embodiment, the display device 15 displays a screen of a game being presently played by the user. The distribution video D representing this game screen being presently displayed is distributed to the video reproduction device 20 by streaming.

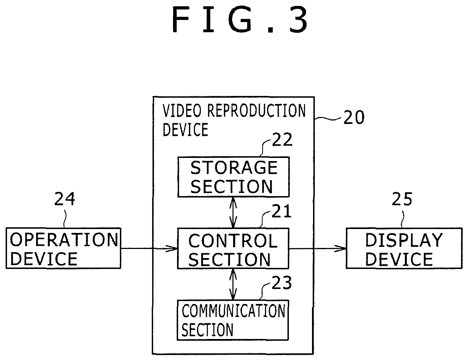

Similarly to the video distribution device 10, the video reproduction device 20 is an information processing device such as a home game machine or a personal computer and, as shown in FIG. 3, is so configured as to include a control section 21, a storage section 22, and a communication section 23. Furthermore, the video reproduction device 20 is connected to an operation device 24 and a display device 25.

The control section 21 is a program control device such as a CPU and executes various kinds of information processing in accordance with a program stored in the storage section 22. The storage section 22 is so configured as to include memory elements such as RAM and ROM and stores a program to be executed by the control section 21 and data as the subject of processing by this program. Furthermore, the storage section 22 functions also as a working memory of the control section 21.

The communication section 23 is an interface for giving and receiving data to and from other devices via the communication network 35 and the video reproduction device 20 carries out transmission and reception of information with the distribution management server 30, the distribution relay server 31, and the message relay server 32 via the communication section 23.

The operation device 24 is a device that accepts operation inputs by the user and may be e.g. a controller attached to a home game machine, a keyboard, a mouse, etc. Furthermore, the operation device 24 may include operation members such as operation buttons and switches disposed on the chassis surface of the video reproduction device 20. The user instructs the video reproduction device 20 to reproduce and stop a video and inputs a message relating to a video in reproduction of this video by operation inputs to the operation device 24.

The display device 25 is an image display device such as a liquid crystal display or an organic EL display and displays an image according to an instruction from the control section 21. In particular, in the present embodiment, the display device 25 displays plural distribution videos D received by the video reproduction device 20 from the distribution relay server 31.

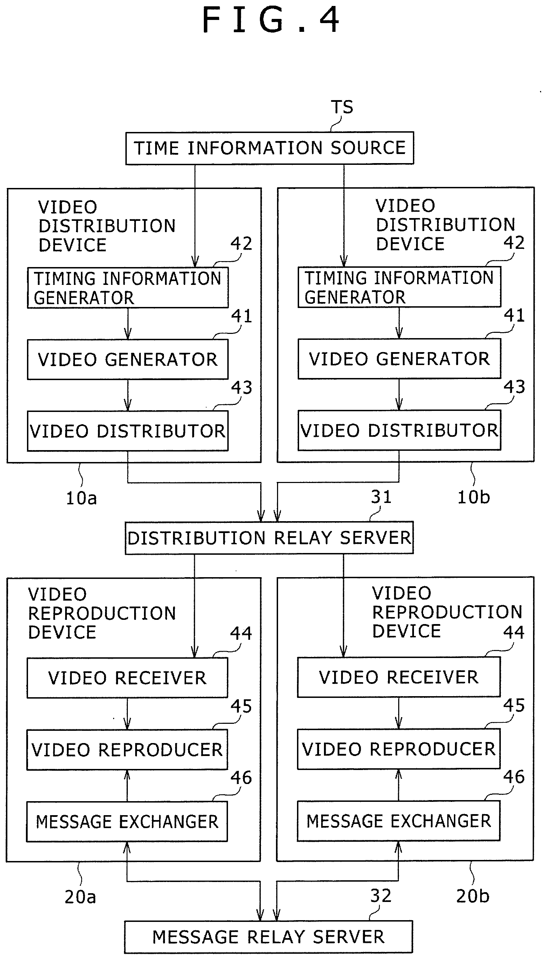

Functions realized by the video reproduction system 1 according to the present embodiment will be described below by using a functional block diagram of FIG. 4. As shown in FIG. 4, from a functional perspective, the video reproduction system 1 is so configured as to include a video generator 41, a timing information generator 42, a video distributor 43, a video receiver 44, a video reproducer 45, and a message exchanger 46. Among these functions, the video generator 41, the timing information generator 42, and the video distributor 43 are realized by execution of a program stored in the storage section 12 by the control section 11 of each video distribution device 10. Furthermore, the video receiver 44, the video reproducer 45, and the message exchanger 46 are realized by execution of a program stored in the storage section 22 by the control section 21 of each video reproduction device 20.

The video generator 41 generates the distribution video D that should be distributed to the video reproduction device 20. In the present embodiment, the video distribution device 10 is a game device that participates in an online game as described above. Therefore, the video generator 41 executes processing relating to this online game and displays a game screen thereof on the display device 15. The user of the video distribution device 10 plays the game while viewing this game screen. The video generator 41 encodes the image of this game screen to generate the distribution video D that should be transmitted to the video reproduction device 20. The distribution video D may be video data based on e.g. an MPEG standard.

Moreover, in the present embodiment, in the generation of this distribution video D, the video generator 41 gives, to one or plural frame images configuring the distribution video D, timing information indicating the generation timing thereof. This timing information is generated by the timing information generator 42 to be described later. If the distribution video D is video based on an MPEG standard, this timing information may be stored in the video data as PTS (Presentation Time Stamp) information used for synchronization of video and audio.

The video generator 41 may give the timing information to all frame images configuring the distribution video D or may give it to frame images generated every predetermined time. Furthermore, if the distribution video D is formed of plural groups each including plural frame images like the GOP (Group Of Pictures) in the MPEG standard, the video generator 41 may give the timing information to the leading frame image of each of these plural groups. In addition, if the distribution video D is video of a constant frame rate, the video generator 41 may give the timing information to only the leading frame image at the start of the distribution. In this case, the video reproduction device 20 can identify the generation timing of each frame image according to what number the frame image is from the leading frame image. In any case, it is preferable for the video generator 41 to give the timing information to at least the leading frame image configuring the distribution video D.

The timing information generator 42 generates the timing information to be given to a frame image by the video generator 41. This timing information may be e.g. time information itself indicating the actual present time and date or a value generated by performing predetermined calculation such as the modulo operation for this time information. In general, an information processing device connected to the Internet communicates with a time information source TS such as a NTP server by a protocol such as the NTP (Network Time Protocol) and obtains information on the universal time coordinated (UTC) to correct its own time information in order to accurately keep time information (RTC) counted by this information processing device. Therefore, it is expected that the plural video distribution devices 10 that obtain the time information based on the UTC from the time information source TS count identical time information at the same time. So, if the timing information generator 42 of each video distribution device 10 generates the timing information by the same method based on the UTC, the plural video distribution devices 10 can give the same timing information to frame images generated at the same timing.

The timing information generator 42 may acquire time information provided by a predetermined time information source TS as the timing information, instead of the information on the UTC. If the plural video distribution devices 10 acquire time information from the same time information source TS, even if this time information does not correspond with the UTC, the respective video distribution devices 10 can give the same timing information to frame images generated at the same timing. Furthermore, the timing information may be not time information but information indicating the time progression in a game provided by a game server or the like. In an online game, the progression of the game is managed by a time counter or the like in order to synchronize game processing executed by the respective video distribution devices 10. Therefore, if the timing information generator 42 generates the timing information based on the value of this time counter, the plural video distribution devices 10 can give the same timing information to frame images generated when the progress status of the game is at the same timing. In this case, the game server that executes processing of the online game (or any of the plural video distribution devices 10) functions as the time information source TS. In any case, by generating the timing information based on time information acquired from the common time information source TS, the timing information generators 42 of the plural video distribution devices 10 can give the same timing information to frame images generated at the same timing although each video distribution device 10 independently generates the distribution video D.

The video distributor 43 distributes, by streaming, the distribution video D generated and given the timing information by the video generator 41 to the distribution relay server 31. The distribution video D transmitted from each video distribution device 10 is transmitted to the video reproduction device 20 that requests video distribution by the distribution relay server 31. In the present embodiment, the video reproduction device 20 to which the distribution relay server 31 should distribute the distribution video D is decided with the following procedure. Specifically, when starting an online game in which the distribution video D can be distributed to the video reproduction device 20, each video distribution device 10 notifies the distribution management server 30 of that effect. Meanwhile, each video reproduction device 20 acquires, from the distribution management server 30, information on the video distribution devices 10 that can presently distribute distribution videos D, and selects the distribution video D regarding which the video reproduction device 20 desires to receive distribution among them to transmit a request for distribution start to the distribution relay server 31. When receiving this request, the distribution relay server 31 starts a relay of the distribution video D.

The video receiver 44 receives the distribution video D distributed by the video distributor 43 of each of the plural video distribution devices 10. In the present embodiment, all distribution videos D are relayed by the distribution relay server 31 and thus the video receiver 44 receives the plural distribution videos D as the reproduction target from the distribution relay server 31. The video receiver 44 stores data of each received distribution video D in a buffer area B ensured in the storage section 22.

The video reproducer 45 sequentially reads out the data of the plural distribution videos D received by the video receiver 44 and stored in the buffer area B, to reproduce the distribution videos D. At this time, the video reproducer 45 decides the timing when it reads out these distribution videos D from the buffer area B and displays them on a screen of the display device 25 based on the timing information included in each distribution video D. Specifically, the video reproducer 45 carries out synchronous control of the reproduction timing among the plural distribution videos D so that frame images generated by the plural video distribution devices 10 at the same timing may be displayed on the screen at the same timing.

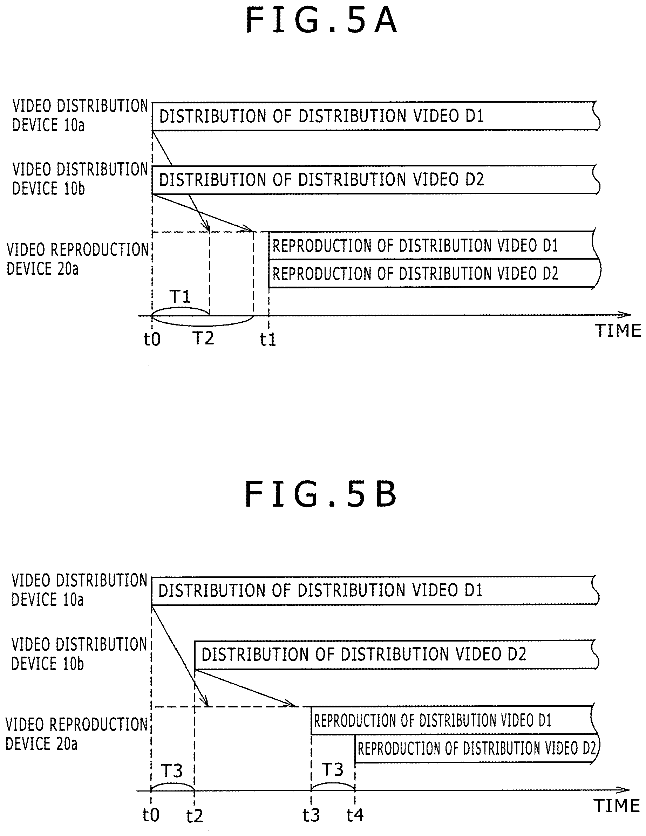

One example of the synchronous control between the distribution videos D1 and D2 by the video reproducer 45 will be explained below by using time charts of FIGS. 5A and 5B. First, in the example of FIG. 5A, it is assumed that the video generator 41 of the video distribution device 10a generates a leading frame image F1 of the distribution video D1 at time t0 and the first packet of the distribution video D1 is stored in the buffer area B of the video reproduction device 20a at time (t0 + T1) later than the time t0 by a delay time T1 attributed to a network delay or the like. Meanwhile, suppose that a leading frame image F2 of the distribution video D2 is generated by the video generator 41 of the video distribution device 10b at the time t0 likewise and takes a delay time T2 longer than the delay time T1 to be stored in the buffer area B of the video reproduction device 20a. Here, if the video reproducer 45 reproduces the distribution video D1 and the distribution video D2 stored in the buffer area B immediately after the reception without timing adjustment, the two frame images generated at the same time t0 are reproduced at timings offset by the time equivalent to (T2 - T1). Because the two distribution videos D1 and D2 are videos of the game screen of the same online game, the offset of the reproduction timing of these videos causes e.g. a disadvantage that one event that occurred in the game is displayed with a timing offset among the plural distribution videos D. So, the video reproducer 45 carries out control to delay the timing of reading of the distribution video D1 from the buffer area B so that frame images generated at the same time may be displayed at the same timing.

Specifically, when the data of the preceding distribution video D1 is received, the video reproducer 45 refers to the timing information given to the leading frame image F1 included therein to identify the generation timing of this frame image F1. Then, the video reproducer 45 waits for reception of the leading frame image F2 of the distribution video D2 that should be contemporaneously reproduced. When the data of the distribution video D2 is received, the video reproducer 45 refers to the timing information given to the leading frame image F2 thereof to identify the generation timing of this frame image F2. Because the generation timings of both correspond with the time t0 here, the video reproducer 45 simultaneously starts reproduction of the distribution videos D1 and D2 in such a manner that the leading frame images F1 and F2 are simultaneously displayed at time t1 later than time (t0 + T2), at which the reception of the data of both the distribution videos D1 and D2 starts.

Differently from FIG. 5A, FIG. 5B shows an example of the case in which there is an offset between generation timing t0 of the leading frame image F1 in the video distribution device 10a and generation timing t2 of the leading frame image F2 in the video distribution device 10b. Specifically, in FIG. 5B, the generation timing t2 of the leading frame image F2 is later than the generation timing t0 of the leading frame image F1 by a time T3. In this case, the video reproducer 45 carries out such synchronous control as to duplicate the offset between the timings of both. Specifically, after receiving the leading frame image of each of the distribution video D1 and the distribution video D2 in turn, the video reproducer 45 starts reproduction of the respective distribution videos D at timings decided according to the pieces of the timing information given to both. In the example of FIG. 5B, first the video reproducer 45 starts the reproduction of the distribution video D1 at time t3 and thereafter starts the reproduction of the distribution video D2 at the timing (time t4) of the elapse of the time equivalent to the time T3 (= t2 - t0). This allows the actual timing offset in the generation of these frame images to be duplicated at the time of the reproduction in the video reproduction device 20.

Moreover, also about the respective frame images displayed subsequent to the leading frame images, the video reproducer 45 continues the reproduction processing in such a manner that the timings of generation of the respective frame images correspond with each other between the distribution video D1 and the distribution video D2. Specifically, if the distribution videos D1 and D2 are video data of a constant frame rate, the video reproducer 45 may perform video reproduction at this frame rate. Furthermore, if the timing information is given also to subsequent frame images, by executing the reproduction processing while synchronizing the distribution video D1 and the distribution video D2 by using this timing information as needed, the synchronization of the subsequent distribution videos D1 and D2 can be maintained even if the distribution of the distribution video D retards and the reproduction processing is temporarily suspended.

In the above description, it is assumed that the video reproduction device 20 performs reproduction from the leading frame image for both the distribution videos D1 and D2. However, the configuration is not limited thereto. Even in the case of receiving the distribution videos D1 and D2 from middle points, if the timing information is given also to middle frame images in each of the distribution videos D1 and D2, the video reproducer 45 can reproduce both with synchronization therebetween by using this timing information given to the middle frame images.

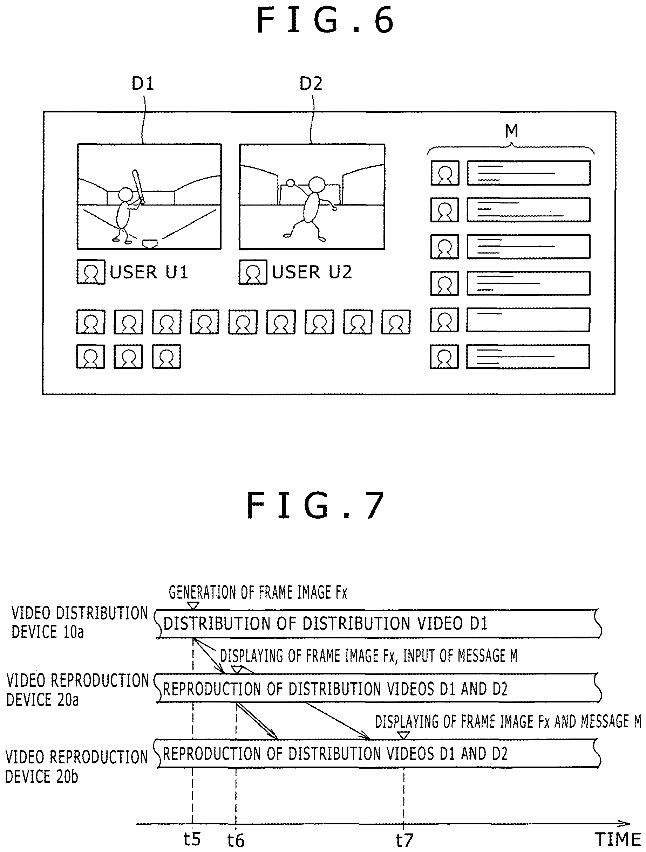

Furthermore, the video reproducer 45 displays, together with the plural distribution videos D, a message M posted by a user who is viewing these videos. As described above, in the present embodiment, the plural video reproduction devices 20a and 20b receive the same distribution videos D1 and D2 and contemporaneously reproduce them. Here, the users U3 and U4 who are viewing the distribution videos D1 and D2 can each post the message M relating to the distribution videos D being presently reproduced. The message exchanger 46 transmits the messages M posted by the respective users to other video reproduction devices 20 that are reproducing the same distribution videos D. In the present embodiment, the message exchanger 46 transmits the messages M posted by the users to other video reproduction devices 20 via the message relay server 32. That is, the message relay server 32 that has received the messages M from the respective video reproduction devices 20 transmits the received messages M to other video reproduction devices 20 that are reproducing the same distribution videos D as those of the video reproduction devices 20 that have transmitted these messages M. Incidentally, the message relay server 32 may transmit the messages M not only to the video reproduction devices 20 but also to the video distribution devices 10 that are distributing the distribution videos D being presently reproduced by the video reproduction devices 20 that have transmitted the messages M. The video reproducer 45 of the video reproduction device 20 that has received the messages M from the message relay server 32 displays the received messages M on the screen of the display device 25 in addition to the distribution videos D being presently reproduced. This allows the user of each video reproduction device 20 to view the messages M posted by other users who are viewing the same videos in addition to the videos. FIG. 6 shows a specific example of a display screen that simultaneously displays the plural distribution videos D1 and D2 and the messages M in this manner. In FIG. 6, besides the distribution videos D1 and D2 and the messages M, icons of users who are viewing these distribution videos D1 and D2 are displayed below the distribution videos D1 and D2.

In the present embodiment, the display timing of this posted message M is also so controlled as to synchronize with video based on timing information given to this message M. This control will be explained below by using a time chart of FIG. 7. Here, as a specific example, explanation will be made about a case in which the user U3 of the video reproduction device 20a posts the message M and the video reproducer 45 of the video reproduction device 20b displays this message M together with the distribution videos D. In the diagram, transmission of the message M is indicated by a double-lined arrow.

When the user U3 makes operation inputs to the operation device 24 to input the message M, the message exchanger 46 identifies the generation timings of the frame images that configure a respective one of the distribution videos D1 and D2 and were displayed by the video reproducer 45 at the end timing of the input of the message M by the user U3 (defined as time t6). Here, the frame image in the distribution video D1 displayed in the video reproduction device 20a at the time t6 is defined as a frame image Fx and the timing at which this frame image Fx is generated by the video distribution device 10a is defined as time t5. In this case, if the timing information is given to the frame image Fx, the timing indicated by this timing information is the time t5, which is the generation timing of this frame image. Even if the timing information is not given to the frame image Fx, the time t5 can be identified if information on a frame image with the timing information displayed in the latest past (defined as frame image Fy) is used. Specifically, the generation timing t5 of the frame image Fx displayed at the time t6 can be identified by adding the time elapsed from displaying of this frame image Fy until the time t6 to the timing indicated by the timing information given to this frame image Fy. The message exchanger 46 gives the timing information indicating the time t5 identified in this manner to the message M and transmits it to the message relay server 32.

The video reproduction device 20b receives the message M transmitted by the video reproduction device 20a via the message relay server 32. The video reproducer 45 of the video reproduction device 20b refers to the timing information given to the received message M and decides the display timing of this message M. If the frame image Fx generated at the time t5 indicated by this timing information has been already displayed, the video reproducer 45 immediately displays the received message M on the screen. On the other hand, if the reproduction of the distribution videos D1 and D2 by the video reproduction device 20b is later than that by the video reproduction device 20a and the video reproduction device 20b has not yet displayed the frame image Fx, the video reproducer 45 does not immediately display the received message M but displays it at timing of displaying of the frame image Fx (here, time t7) simultaneously. Such control can avoid a situation in which, earlier than displaying of the frame image Fx, the user U4 views the message M input by the user U3 when the frame image Fx was displayed.

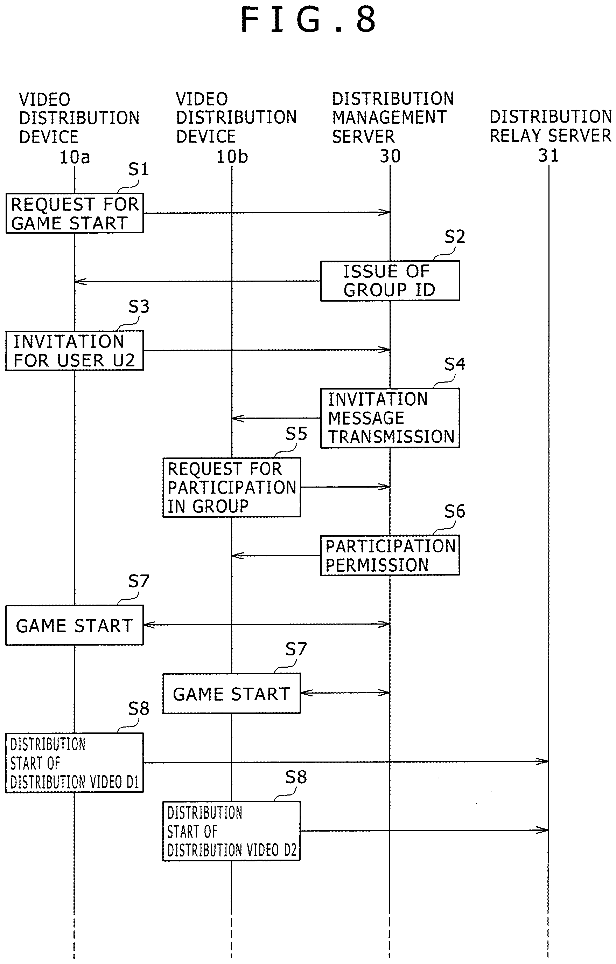

By using a flow diagram of FIG. 8, explanation will be made below about one example of a processing flow when the video distribution devices 10a and 10b start game processing and distribution processing of the distribution videos D.

Here, first the video distribution device 10a makes a request for the start of an online game in which plural persons can participate to the distribution management server 30 (S1). In response to this request, the distribution management server 30 issues a group ID for identifying the group to which the video distribution devices 10 that are to participate in this game and the video reproduction devices 20 that are to receive distribution of the distribution videos D of this game from now belong (S2). This group is equivalent to e.g. a chat room in chatting and information relating to the distribution videos D is shared among the devices that belong to this group. The distribution management server 30 manages information on the user U1 using the video distribution device 10a, which has made the request for the start of the online game, in association with this group ID.

Next, the video distribution device 10a transmits, to the distribution management server 30, a message to invite the user U2 to participate in the group identified by the group ID assigned in S2 (S3). The distribution management server 30 identifies the video distribution device 10b used by the user U2 and transmits the invitation message to this identified video distribution device 10b (S4). Here, suppose that the user U2 has logged in the distribution management server 30 in advance by using the video distribution device 10b and the distribution management server 30 has acquired information on the video distribution device 10b used by the user U2.

The user U2 of the video distribution device 10b that has received the invitation message transmits a request for participation in the group in response to the invitation message (S5). The distribution management server 30 permits the participation of the user U2 in response to this participation request and associates the ID of the user U2 with the group ID issued in S2 (S6). As a result, the online game is started between the user U1 and the user U2, who participate in the same group (S7). If the video distribution devices 10a and 10b acquire timing information by using a predetermined time information source, the distribution management server 30 may provide, at this timing, information on the time information source used by the video distribution device 10a to the video distribution device 10b.

Simultaneously with the game start, the video distribution devices 10a and 10b generate the distribution videos D with the timing information and start transmission of the distribution videos D to the distribution relay server 31 (S8). From then on, the user of the video reproduction device 20 is enabled to receive the distribution videos D by making a request to the distribution management server 30.

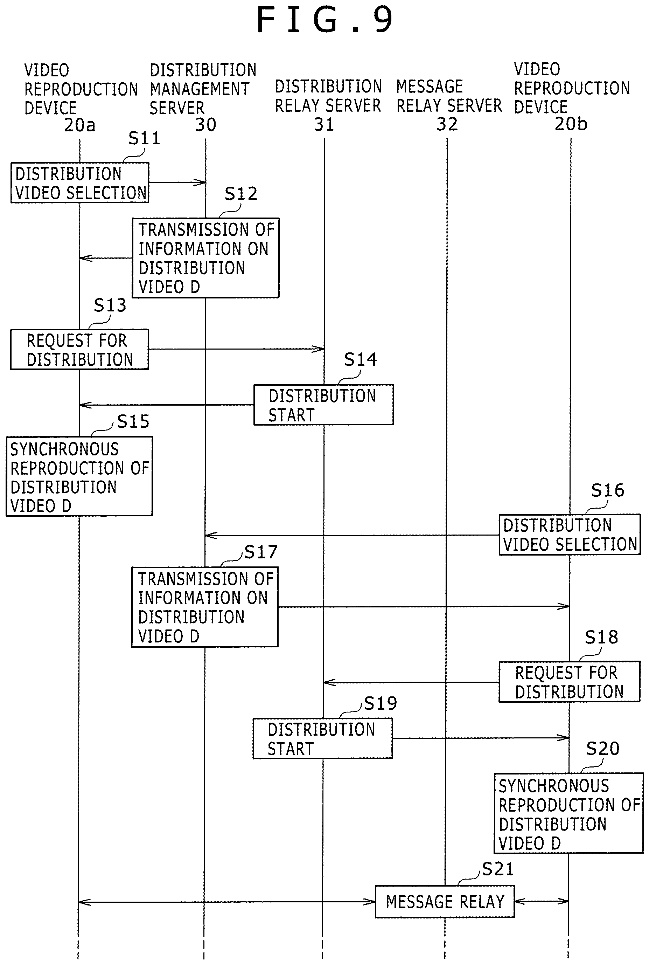

By using a flow diagram of FIG. 9, explanation will be made below about one example of a processing flow when the video reproduction devices 20a and 20b receive the distribution videos D.

The user U3 makes an instruction to the video reproduction device 20a to access the distribution management server 30 and select the video the user U3 desires to view among the video distribution devices 10 that are presently distributing videos (S11). In response to this selection, the distribution management server 30 associates the video reproduction device 20a with the group ID of the group selected by the user U3 (group ID issued in S2). Moreover, the distribution management server 30 transmits, to the video reproduction device 20a, information to identify the distribution videos D (e.g. distribution URLs of the distribution video D1 and the distribution video D2 on the distribution relay server 31) (S12). The video reproduction device 20a requests the distribution relay server 31 to distribute the plural distribution videos D by using the information received in S12 (S13). In response to this request, the distribution relay server 31 distributes streaming data of the plural distribution videos D (here, distribution videos D1 and D2) to the video reproduction device 20a (S14). The video reproduction device 20a reproduces the plural distribution videos D distributed in S14 while synchronizing them (S15). Meanwhile, in the same procedure as S11 to S15, the video reproduction device 20b also accesses the distribution management server 30 and the distribution relay server 31 to participate in the group identified by the group ID issued in S2 and start reproduction of the distribution videos D (S16 to S20). By the processing thus far, the video distribution devices 10a and 10b and the video reproduction devices 20a and 20b are associated with the group ID issued in S2. From then on, the message relay server 32 transmits the messages M posted from the video reproduction devices 20a and 20b to each device associated with this group ID (S21). This allows the messages M to be shared among the devices that belong to the same group.

According to the video reproduction system 1 in accordance with the present embodiment described above, each of the plural video distribution devices 10 gives a frame image included in the generated distribution video D the timing information indicating the generation timing thereof and the video reproduction device 20 carries out synchronization among the plural distribution videos D by using this timing information. Thus, the plural distribution videos D can be reproduced without a timing offset.

The embodiment of the present invention is not limited to the above-described one. For example, the video distribution device 10 may distribute the distribution video D by streaming not to the distribution relay server 31 but directly to the video reproduction device 20. Similarly, each video reproduction device 20 may transmit the message M directly to other video reproduction devices 20 that are reproducing the same distribution video D.

Furthermore, the distribution relay server 31 may execute processing of bit rate conversion and so forth for the distribution video D distributed by the video distribution device 10 and then distribute the distribution video D to the video reproduction device 20. Also in the case of executing such processing, the distribution relay server 31 maintains the timing information given to the respective frame images in the distribution video D. Moreover, although the video distribution device 10 gives the timing information to the distribution video D in the above description, the distribution relay server 31 may give the timing information instead of this. In this case, the distribution relay server 31 acquires, from the video distribution device 10, information indicating the generation timings of frame images by the video distribution device 10 separately and gives these frame images the information indicating the generation timings thereof. Furthermore, the distribution relay server 31 may synthesize the distribution videos D distributed by each of the plural video distribution devices 10 to generate one synthesized video and distribute it to the video reproduction device 20. In this case, the distribution relay server 31 refers to the timing information given to frame images in each distribution video D and generates the synthesized video in which the plural distribution videos D are displayed in synchronization.

Moreover, in the above description, the plural video distribution devices 10 each distribute one distribution video D. However, one video distribution device 10 may distribute the plural distribution videos D. For example, the video distribution device 10a may generate, besides the distribution video D1 representing a game screen being presently displayed on the display device 15, a distribution video D3 representing a state when the same game space is viewed from another viewpoint and distribute both of these distribution videos D1 and D3 to the video reproduction device 20. Also in this case, the video distribution device 10a gives the same timing information to frame images generated at the same timing in a respective one of the distribution videos D1 and D3. Then, the video reproduction device 20 that has received the distribution videos D1 and D3 reproduces both with synchronization therebetween by using the timing information included in each of the distribution videos D1 and D3 similarly to the above-described example. This allows the user of the video reproduction device 20 to view the play status of one game from multiple viewpoints simultaneously.

Furthermore, in the above description, the individual video reproduction devices 20 independently perform synchronous reproduction of the plural distribution videos D. However, not only that, the plural video reproduction devices 20 may synchronize with each other and reproduce the same distribution video D at the same timing. In this case, the plural video reproduction devices 20 acquire time information from a common time information source and synchronize the time counted by the video reproduction device 20 itself with the time of the other video reproduction devices 20 in advance. Then, when reproducing the same distribution video D, the video reproduction devices 20 mutually communicate to simultaneously reproduce the distribution video D after all video reproduction devices 20 become able to reproduce the distribution video D.

Moreover, in the above description, the distribution video D is video representing a game screen. However, the distribution video D is not limited to such video and may be e.g. video obtained by shooting by a video camera. For example, suppose that the plural video distribution devices 10 are each connected to a video camera and these cameras shoot the same game of sports from positions different from each other. Each video distribution device 10 gives timing information generated based on the UTC or the like to video obtained by the shooting by this camera and distributes the video as the distribution video D. This allows the user of the video reproduction device 20 to view the plural videos obtained by shooting the same game from different viewpoints with synchronization thereof with each other.

Furthermore, in the above description, each video distribution device 10 performs real-time distribution (streaming distribution) in which the video distribution device 10 sequentially distributes the distribution video D while generating it and the video reproduction device 20 also reproduces the distribution video D in real time while receiving it. However, the distribution video D may be downloaded to the video reproduction device 20 once and stored as a data file. Also in this case, the video reproduction device 20 can reproduce data of the plural distribution videos D contemporaneously generated while synchronizing them by using timing information.

## Claims

1. A video reproduction system comprising:
a plurality of video distribution devices (10a, 10b); and
a plurality of video reproduction devices (20a, 20b), wherein
each of the plurality of video distribution devices (10a, 10b) includes
timing information giving means (42) configured to give, to a frame image included in a distribution video to be distributed from the respective video distribution device (10a, 10b) to the video reproduction device (20a, 20b), timing information indicating generation timing of the frame image,
a video generator (41) configured to generate, by encoding video data, the distribution video to be distributed from the respective video distribution device (10a, 10b) to the video reproduction device (20a, 20b), and
distributing means (43) configured to distribute the distribution video given the timing information;
wherein each of the plurality of video reproduction devices (20a, 20b) includes
receiving means (44) configured to receive each of the distribution videos distributed from the plurality of video distribution devices, and
reproducing means (45) configured to reproduce the received plurality of distribution videos in synchronization with each other based on the timing information included in each of the plurality of distribution videos; **characterized in that**
each of the plurality of video distribution devices (10a, 10b) is configured to distribute the same distribution video to each of the plurality of the video reproduction devices (20a, 20b);
the video reproduction system further comprises a common time information source configured to provide time information to each of the plurality of the video reproduction devices (20a, 20b); and
the plurality of the video reproduction devices (20a, 20b) is configured to synchronize with each other based on the time information and to reproduce the distribution video that is distributed by each of the video distribution devices (10a, 10b) simultaneously at the same timing.

2. The video reproduction system according to claim 1, wherein
a first video reproduction device (20a) in the plurality of the video reproduction devices (20a, 20b) further includes means (46) configured to transmit, to a second video reproduction device (20b) in the plurality of the video reproduction devices (20a, 20b), a message input by a user in reproduction of the plurality of distribution videos together with timing information indicating generation timing of a frame image reproduced at timing of the input; and
the reproducing means (45) of the second video reproduction device (20b) is configured to display the transmitted message together with the plurality of distribution videos while synchronizing the message with the pluralities of distribution videos according to the timing information transmitted together with the message.

## Patentansprüche

1. Videoreproduktionssystem, das Folgendes umfasst:
eine Vielzahl von Videoverteilungsvorrichtungen (10a, 10b) und
eine Vielzahl von Videoreproduktionsvorrichtungen (20a, 20b), wobei
jede der Vielzahl von Videoverteilungsvorrichtungen (10a, 10b) Folgendes beinhaltet Zeitpunktinformationsübergabemittel (42), das dazu ausgelegt ist, einem Rahmenbild, das in einem Verteilungsvideo beinhaltet ist, das von der jeweiligen Videoverteilungsvorrichtung (10a, 10b) an die Videoreproduktionsvorrichtung (20a, 20b) zu verteilen ist, Zeitpunktinformationen, die einen Erzeugungszeitpunkt des Rahmenbildes anzeigen, zu übergeben,
einen Videoerzeuger (41), der dazu ausgelegt ist, durch Codieren von Videodaten das Verteilungsvideo, das von der jeweiligen Videoverteilungsvorrichtung (10a, 10b) an die Videoreproduktionsvorrichtung (20a, 20b) zu verteilen ist, zu erzeugen, und
ein Verteilungsmittel (43), das dazu ausgelegt ist, das Verteilungsvideo, an das die Zeitpunktinformationen übergeben wurden, zu verteilen; wobei jede der Vielzahl von Videoreproduktionsvorrichtungen (20a, 20b) Folgendes beinhaltet
ein Empfangsmittel (44), das dazu ausgelegt ist, jedes der Verteilungsvideos, das von der Vielzahl von Videoverteilungsvorrichtungen verteilt wird, zu empfangen, und
ein Reproduktionsmittel (45), das dazu ausgelegt ist, die empfangene Vielzahl von Verteilungsvideos auf Basis der Zeitpunktinformationen, die in jedem der Vielzahl von Verteilungsvideos beinhaltet sind, in Synchronisation miteinander zu reproduzieren; **dadurch gekennzeichnet, dass**
jede der Vielzahl von Videoverteilungsvorrichtungen (10a, 10b) dazu ausgelegt ist, dasselbe Verteilungsvideo an jede der Vielzahl von Videoreproduktionsvorrichtungen (20a, 20b) zu verteilen;
das Videoreproduktionssystem ferner eine gemeinsame Zeitinformationsquelle umfasst, die dazu ausgelegt ist, jeder der Vielzahl von Videoreproduktionsvorrichtungen (20a, 20b) Zeitinformationen bereitzustellen; und
die Vielzahl von Videoreproduktionsvorrichtungen (20a, 20b) dazu ausgelegt ist, auf Basis der Zeitinformationen miteinander zu synchronisieren und das Verteilungsvideo, das von jeder der Videoverteilungsvorrichtungen (10a, 10b) verteilt wird, gleichzeitig zum selben Zeitpunkt zu reproduzieren.

2. Videoreproduktionssystem nach Anspruch 1, wobei eine erste Videoreproduktionsvorrichtung (20a) in der Vielzahl der Videoreproduktionsvorrichtungen (20a, 20b) ferner ein Mittel (46) beinhaltet, das dazu ausgelegt ist, zu einer zweiten Videoreproduktionsvorrichtung (20b) in der Vielzahl der Videoreproduktionsvorrichtungen (20a, 20b) eine Nachricht zu übertragen, die in Reproduktion der Vielzahl von Verteilungsvideos zusammen mit Zeitpunktinformationen, die einen Erzeugungszeitpunkt eines Rahmenbildes, das zum Zeitpunkt der Eingabe reproduziert wurde, anzeigen, von einem Benutzer eingegeben wurde; und
das Reproduktionsmittel (45) der zweiten Videoreproduktionsvorrichtung (20b) dazu ausgelegt ist, die übertragene Nachricht zusammen mit der Vielzahl von Verteilungsvideos anzuzeigen, während die Nachricht mit den Vielzahlen von Verteilungsvideos gemäß den Zeitpunktinformationen, die zusammen mit der Nachricht übertragen wurden, synchronisiert wird.

## Revendications

1. Système de reproduction vidéo comprenant :
une pluralité de dispositifs de distribution vidéo (10a, 10b) ; et
une pluralité de dispositifs de reproduction vidéo (20a, 20b), dans lequel
chacun de la pluralité de dispositifs de distribution vidéo (10a, 10b) comporte
un moyen donnant des informations de minutage (42) configuré pour donner, à une image de trame contenue dans une vidéo de distribution à distribuer du dispositif de distribution vidéo respectif (10a, 10b) au dispositif de reproduction vidéo (20a, 20b), des informations de minutage indiquant le moment de la génération de l'image de trame,
un générateur vidéo (41) configuré pour générer, en codant des données vidéo, la vidéo de distribution à distribuer du dispositif de distribution vidéo respectif (10a, 10b) au dispositif de reproduction vidéo (20a, 20b), et
un moyen de distribution (43) configuré pour distribuer la vidéo de distribution en fonction des informations de minutage ;
dans lequel chacun de la pluralité de dispositifs de reproduction vidéo (20a, 20b) comporte
un moyen de réception (44) configuré pour recevoir chacune des vidéos de distribution distribuées depuis la pluralité de dispositifs de distribution vidéo, et
un moyen de reproduction (45) configuré pour reproduire la pluralité reçue de vidéos de distribution en synchronisation les unes avec les autres sur la base des informations de minutage contenues dans chacune de la pluralité de vidéos de distribution ;
**caractérisé en ce que**
chacun de la pluralité de dispositifs de distribution vidéo (10a, 10b) est configuré pour distribuer la même vidéo de distribution à chacun de la pluralité de dispositifs de reproduction vidéo (20a, 20b) ;
le système de reproduction vidéo comprend en outre une source d'informations temporelles commune configurée pour fournir des informations temporelles à chacun de la pluralité de dispositifs de reproduction vidéo (20a, 20b) ; et
la pluralité de dispositifs de reproduction vidéo (20a, 20b) sont configurés pour se synchroniser les uns avec les autres sur la base des informations temporelles et pour reproduire la vidéo de distribution qui est distribuée par chacun des dispositifs de distribution vidéo (10a, 10b) simultanément au même moment.

2. Système de reproduction vidéo selon la revendication 1, dans lequel
un premier dispositif de reproduction vidéo (20a) parmi la pluralité de dispositifs de reproduction vidéo (20a, 20b) comporte en outre un moyen (46) configuré pour transmettre, à un deuxième dispositif de reproduction vidéo (20b) parmi la pluralité de dispositifs de reproduction vidéo (20a, 20b), un message saisi par un utilisateur dans la reproduction de la pluralité de vidéos de de distribution conjointement avec des informations de minutage indiquant le moment de la génération d'une image de trame reproduite au moment de la saisie ; et
le moyen de reproduction (45) du deuxième dispositif de reproduction vidéo (20b) est configuré pour afficher le message transmis conjointement avec la pluralité de vidéos de distribution tout en synchronisant le message avec les pluralités de vidéos de distribution en fonction des informations de minutage transmises conjointement avec le message.
